# EUROPEAN PATENT SPECIFICATION

(11) **EP 2 247 971 B1**
(45) Date of publication and mention of the grant of the patent: **05.10.2011**
(21) Application number: 09714047.9
(22) Date of filing: 26.02.2009
(51) Int. Cl.: G02B 6/02, G01D 5/353

(54) **Method and means for mounting a fibre Bragg grating on a surface**
Verfahren und Mittel zur Befestigung einer Bragg-Gitterfaser auf einer Oberfläche
Procédé et moyens destinés au montage sur une surface de fibre optique comprenant un réseau de Bragg

(30) Priority: 26.02.2008 GB 0803448
(43) Date of publication of application: 10.11.2010
(73) Proprietor: FBGS International BVBA, 2440 Geel (BE)
(72) Inventor: VLEKKEN, Johan, B-3590 Diepenbeek (BE); VAN ROOSBROECK, Jan, B-2220 Heist op den Berg (BE); VOET, Marc, F-07110 Rocles (FR)
(74) Representative: Bird, William Edward
(86) International application number: PCT/EP2009/052301
(87) International publication number: WO 2009/106576

(56) References cited:
- EP-A- 1 318 421
- WO-A-2006/094352
- JP-A- 2005 091 151
- JP-A- 2005 134 199
- JP-A- 2007 310 208
- US-A- 6 122 430
- US-B1- 6 187 700

## Description

The present invention relates to optical fiber strain gauges and to a method and means of mounting optical fibers to surfaces of structure.

### Technical Background

Strain sensing of civil structures is conventionally done by means of electrical strain gauges. Recently, fiber optic sensors have gained an increased interest as an alternative. Reasons for this are the existence of some appealing advantages related to fiber optic sensors like e.g. immunity against electromagnetic radiation, explosion safety etc.. Therefore, fiber optic sensors are often used in strain sensing, where environments are harsh e.g. under conditions of high electromagnetic radiation, or in high-temperature or highly corrosive environments.

The fiber optic sensors of interest are so-called Fiber Bragg Gratings (FBGs). Fiber Bragg Gratings are point-like sensors which form an intrinsic part of an optical fiber. The Fiber Bragg Gratings are sensitive to mainly temperature and strain variations. These sensors take advantage of the fact that a strain or temperature change transferred to the fiber will cause a shift of the Bragg wavelength reflected by the Bragg gratings. This shift in wavelength can be converted to the strain or temperature change monitored by the fiber.

In the proper configuration, Fiber Bragg Gratings can be applied as strain sensors and thus have the potential to replace the more traditional electrical strain gauges in some particular applications. These sensors can be referred to as "FBG strain gauges" or "FBG strain sensors". Fiber Bragg Grating sensors are used for example as optical strain gauges in civil and aerospace engineering, and for monitoring displacements and strains in mechanical structures.

However, a field needing further development is the installation technique of the Fiber Bragg Grating sensors to the surfaces of the structures to be monitored. Attaching a glass fiber optical sensor to a typically metallic structure that is to be monitored is not trivial.

Prior art techniques for attaching a fiber optic strain sensor to a metal structure include metal or metal oxide spray coatings to encapsulate the strain sensor and attach it to the surface of the metal structure to be monitored. However, plasma spraying exerts considerable force upon the fiber and can damage the sensor.

Another prior art technique for attaching fiber optic strain sensors to a structure uses ceramic adhesives or cements. However, these ceramic adhesives or cements can induce additional residual stress to the mounted fiber which will affect measurements.

Other prior art techniques for attaching fiber optic strain sensors to a structure use glues or adhesives. However, when using pre-coated fibers the amount of adhesive may not be sufficient to ensure proper adherence of the fiber while, when coating the fiber after being attached to the structure, excess adhesive can allow slipping and buckling of the fiber.

Moreover, these fitting methods suffer from questionable accuracy of the location and fixing of the fiber. Therefore, repeatable and reproducible attachment of an optical fiber is still a need.

Patent application EP 1 816 432 A1 discloses a carrier for fixing the sensor to a surface. However, carriers, especially metal carriers, exhibit a different elasticity compared to the structure to be monitored and to the fiber and therefore will apply additional strain. Moreover, a carrier attached to the fiber will restrict fiber movement and may degrade or at least affect the performance of the fiber. Unfortunately, due to a lack of flexibility the carrier moreover impairs the flexibility of the mounting of the fiber.

JP 2005 134199 discloses a method of mounting a fibre Bragg grating to a surface using a plate to uniformly attach the fibre to the surface.

Therefore, a need exists to provide a method for mounting optical fibers allowing for reliable fixing parameters.

### Summary of the invention

It is one object of the present invention to provide improved means and method for reliable mounting of optical fibers.

This object is met with the methods and means according to the independent claims of the present invention. The dependent claims relate to preferred embodiments.

The invention provides in one embodiment a method for mounting an optical fiber containing at least one fiber Bragg grating to a surface of a structure, comprising the steps of:
a) providing a pad wherein said pad comprises a first and a second side along a longitudinal axis of the pad, a first cavity on the first side for receiving an adhesive, the adhesive being for attaching the fiber onto the surface of the structure, and a first and a second slot on both sides of the first cavity extending along the longitudinal axis of the pad for receiving portions of the optical fiber when the optical fiber is attached to the pad,
b) positioning and attaching the optical fiber onto said pad to extend along the longitudinal axis of the pad wherein the portion of the fiber containing at least one fiber Bragg grating is positioned in said first cavity of said pad and portions of said fiber are positioned in said first and second slot on both sides of said first cavity,
c) applying an adhesive to the surface of said first cavity, or on the surface of the structure, or on both of them,
d) positioning said pad with said optical fiber attached thereon onto the surface of the structure so that said optical fiber is positioned on said substrate surface,
e) curing the adhesive to secure said optical fiber to said substrate surface, and
f) removing the pad while leaving said optical fiber secured by a coating of said adhesive on said substrate surface,
wherein the surface of said first side of the pad is non-stick to the adhesive before positioning and attaching of the optical fiber onto said pad, the pad material is optionally UV transparent, translucent or semi-transparent, the adhesive is a UV curable adhesive and wherein curing is performed by UV light curing.

The adhesive can be put directly on top of the structure and subsequently the dry sensor pad is positioned on top of this adhesive and/or the adhesive can be applied to the surface of the first cavity first. When the adhesive is directly put on the structure, the cavity receives some of the adhesive when the pad is placed on the adhesive layer.

Another embodiment of the present invention provides a pad for mounting an optical fiber containing at least one fiber Bragg grating to a surface of a structure, comprising:
- a first and a second side along a longitudinal axis of the pad,
- a first cavity on said first side having a length between ≥ 25 mm and ≤ 35 mm, optionally 10 to 50 mm for receiving an adhesive, the adhesive being for attaching the fiber onto the surface of the structure,

- a second cavity on the second side along the longitudinal axis of the pad opposite to the first cavity for receiving a means for applying pressure to the pad when being positioned on the surface of the structure, and
- a first and a second slot on either side of said first cavity extending along the longitudinal axis of the pad for receiving portions of the optical fiber when the optical fiber is attached to the pad,
wherein the pad is fabricated from a material being transparent, translucent or semi-transparent for UV light and wherein a surface of said first side of the pad is non-stick to the adhesive before positioning and attaching of the optical fiber onto said pad. The pad may also be made of a material or with a coating that does not bind to or react with the adhesive for attaching the fiber onto the surface of the structure.

The dependent claims relate to preferred embodiments.

The term "structure" as used herein relates to a test specimen of which the structural strain or displacement is to be determined. Examples for structures are civil and aerospace engineering structures.

The term "fiber" as used herein relates to a single, optical transmission element having a core, cladding, and optionally a coating, wherein the core is the central, light-transmitting region of the fiber, and the cladding being the material surrounding the core to form a guiding structure for light propagation within the core. Core and cladding can be coated with a ceramic which is partly of an organic material and partly of an inorganic material or with one or more polymer layers surrounding the core and/or the cladding, usually adhering directly to the fiber, to provide mechanical and environmental protection of the fiber. The coated fiber is usually further protected with a so-called "buffer", a protective polymer layer without optical properties applied over the coating.

The fibers that can be used as optical fiber include all sorts of conventionally known glass fibers which are typically used in the field of Fiber Bragg Grating (FBG) strain sensors. Such standard FBG-fibers usually are coated with acrylate or polyimide coating. Moreover, Plastic Optical Fibers (POF) can be used instead of glass fibers.

Preferably, a selected fiber has a high strength. Preferred fibers are the so-called Draw Tower Grating (DTG) fibers. Draw Tower Grating fibers are produced with a process that combines drawing of the optical fibre with the writing of the grating. This has the advantage that no stripping and recoating of the fiber is needed as is done in the case of conventional fiber Bragg grating (FBG) production, where writing of the grating is performed after applying the original fiber coating. Because stripping of the fiber coating is omitted in the DTG production process, the fiber keeps its original strength (no introduction of micro-cracks) and thus has high strength and improved fatigue resistance compared to standard FBGs. For example the breakage of Draw Tower Grating fibers can be up to five fold improved compared to standard Fiber Bragg Grating fibers.

Especially preferred are DTG fibers which are coated with organically-modified ceramics, in particular an Ormocer®. Such organic-inorganic hybrid polymers will provide extraordinarily good mechanical stability of the fiber. Moreover, this coating material has the advantage of having excellent bonding characteristics with the silica from the fiber. In addition, it has a relatively high Young modulus in comparison with more conventional fiber coating materials. For these reasons, the Ormocer® coating is very well suited to transfer the strain from the outside to the fiber. A further advantage of the Ormocer® coating in contrast to conventional fiber coatings and FBGs is that the Ormocer® coating does not need to be stripped off the fiber if the sensor will be used as a strain gauge. Conventional fiber coatings on FBGs have to be stripped off before gluing, but stripping off the fiber before installation is a tricky procedure since the stripped off fiber is very fragile and does easily break.

All dimensions given are not a limitation on the pad itself as the principle stays identical. According to the invention the optical fiber containing at least one fiber Bragg grating can be mounted to a surface of a structure by means of a pad.

It was found that the method according to the invention allows easy installation in combination with improved sensor characteristics. Moreover, the method according to the invention allows repeatable mounting characteristics.

A pad for use with the present invention can comprise a first and a second side along a longitudinal axis of the pad, a first cavity on the first side for receiving an adhesive for attachment of the fiber onto the surface of a structure, and a first and a second slot on both sides of the first cavity extending along the longitudinal axis of the pad for receiving portions of the optical fiber when the optical fiber is attached to the pad.

On both sides of the first cavity the pad comprises regions where portions of the fiber are held in slots, the so-called clamping zones of the pad. This preferred construction of the pad having clamping zones which comprise slots secures the fiber to the pad and allows for stabilisation of the fibers on the pad. Also the clamping zones are preferably adapted so that they maintain the fibers under a pre-tension.

Other preferred features and embodiments of the pad are outlined in the description below referring to the pad and an installation kit which may be used in a method for mounting.

Advantageously, the pad allows easy installation of optical fibers in combination with improved sensor characteristics. More advantageously, the pad allows easy installation of the optical fiber and provides for easy removal of the pad after mounting of the fiber to the structure surface. This is particularly useful for mounting fibers for use as strain gauges or sensors when the fiber is in direct contact with the surface to be monitored and preferably without interfering contact to other rigid material which may exert additional strain to the fiber.

It is advantageous for easy removal of the pad after mounting of the fiber to the structure surface when the pad exhibits little or no bonding with the adhesive used to mount the fiber to the surface. In a preferred embodiment the surface of said first side of the pad is coated with a non-stick coating before positioning and attaching of the optical fiber onto the pad. Using a non-sticking material for the pad or coating the surface of the pad (which will receive fiber and adhesive) with a non-stick coating will provide for easy removal of the pad after mounting without disrupting the adhesive film applied to fix the fiber to the surface.

A preferred non-sticking material is silicon rubber, for example. Preferred non-stick coatings are fluoropolymers, for example selected from the group comprising polytetrafluoroethylene, perfluoroalkoxy polymer resin or fluorinated ethylene-propylene, for example sold under the trade name Teflon® by E. I. DuPont de Nemours Co., Inc..

Preferably, the method comprises steps of conditioning the surface of the structure, such as to clean and/or smooth the surface, before positioning the pad on the structure. It is therefore preferred that the method will further comprise a step of cleaning of the surface of the structure. Preferred cleaning solvents are alcohols, preferably selected from the group comprising ethanol and/or isopropanol. Especially preferred is isopropanol. Furthermore, cleaning solvents which are non alcohol-based can be used, too, since non alcohol-based cleaning solvents are not flammable, which is an advantage for transportation the installation kit.

It is moreover preferred that the method further comprises a step of striating the surface of the structure before positioning the pad. Striating can be performed using an abrasive material, for example abrasive paper. Especially preferred paper has a grain size of 120. It is preferred that cleaning the surface of the structure with a cleaning solvent, for example with alcohol especially isopropanol, and striating is repeated one or several times. Preferably cleaning is repeated until the surface of the structure is clean.

In a next step the fiber is positioned and attached onto the pad. More preferably, the fiber is cleaned with the cleaning solvent, e.g. alcohol especially isopropanol before positioning.

The geometry of the adhesive layer used to bond the optical fiber to the surface is one of the critical characteristics of sensor mounting. One important feature of the mounted fiber Bragg grating sensor is for example the length of the fixation of the fiber to the surface.

This effective length and width of the adhesive coating of the sensor is defined by the length and width of the first cavity of the pad used for mounting. The maximum longitudinal length of the first cavity of the pad is 200 mm. Preferably, the first cavity of the pad for receiving an adhesive has a longitudinal length optionally between, 10 to 50 mm, e.g. between ≥ 25 mm and ≤ 35 mm, preferably between ≥ 28 mm and ≤ 32 mm, more preferred of 30 mm. Such length of the adhesive coating will ensure that the fiber Bragg grating area will be secured to the substrate surface. The lengths should be chosen such that the longitudinal strain transfer reaches a maximum over the grating zone. In the first 5 mm of adhesive the longitudinal strain transfer is probably not perfect.

Preferably, the first cavity of the pad for receiving an adhesive has a width according to the width of the pad. Preferably, the first cavity of the pad for receiving an adhesive has a width between ≥ 5 mm and ≤ 12 mm, preferably between ≥ 6 mm and ≤ 10 mm, more preferably of 8 mm.

The adhesive is applied to the first cavity of the pad and/or directly on the surface of the structure and the first cavity receives the adhesive when the pad is applied to the adhesive layer. In a more preferred embodiment the first cavity of the pad for receiving an adhesive has a dimension of 30 mm length and 8 mm width. The thickness of the glue should preferably be less than 0,4 mm after putting on pressure during the installation. Even if some adhesive escapes from the first cavity, the design provides sufficient adhesive.

Another important mounting parameter is the thickness of the adhesive layer. Preferably the thickness of the adhesive layer is ≤ 0,2 mm. This thickness of the adhesive can provide a secure bonding of the fiber to the structure surface without unduly reducing the elasticity of this mounting.

The thickness of the adhesive layer is predominantly determined by the pressure which is applied on the pad during the UV-curing process. Pressing the pad makes sure that the fiber is pressed to the structure, that the fiber gets slightly pre-tensioned and that the adhesive layer is kept very thin.

On both sides of the first cavity the pad comprises regions where portions of the fiber are held in slots, which may be referred to as clamping zones of the pad. It is preferred that the slots are usable for holding buffered portions of the fiber. The buffered coating is preferably tightly fixed to the coated optical fiber. If not the fiber might slip inside the buffer and no pre-strain can be set. The slots preferably have a size that is slightly smaller than the diameter of the buffered fiber, e.g. typically 900 micron, to provide good mechanical fixation in the slots. In preferred embodiments the slots have a diameter between ≥ 0,5 mm and ≤ 1,3 mm, preferably between ≥ 0,8 mm and ≤ 1 mm, more preferably 0,9 mm. Preferably, the clamping zones and the slots have a length between ≥ 5 mm and ≤ 10 mm, preferably between ≥ 6 mm and ≤ 8 mm, more preferably of 7,5 mm. In preferred embodiments the pad usable for the method according to the invention has a length optionally between 20 and 70 mm, e.g. between ≥ 35 mm and ≤ 55 mm, preferably between ≥ 40 mm and ≤ 50 mm, more preferably 45 mm. Further preferred the pad has a width between ≥ 5 mm and ≤ 12 mm, preferably between ≥ 6 mm and ≤ 10 mm, more preferably of 8 mm. In a more preferred embodiment the pad usable for the method according to the invention has dimensions of 45 mm length and 8 mm width.

In the first cavity, the optical fiber preferably will be free of buffer so that the fiber can make direct contact with the surface to which it will be attached. Preferably, the fiber Bragg grating sensor is realised with the optical fiber positioned in direct or substantially direct contact with the surface of the substrate and embedded in the adhesive. The optical fiber may be "substantially" in direct contact with the surface of the substrate as it can occur that the adhesive, which is applied to achieve the mounting of the optical fiber onto the substrate, may flow to a small extent underneath the optical fiber and between the surface of the substrate and the optical fiber.

The adhesive is applied to the surface of the first cavity and/or directly on the surface of the structure and will be cured onto the substrate surface to secure the optical fiber to the substrate surface. So the adhesive will bond the fiber to the substrate and will influence the strength of the bonding. Moreover, another task of the adhesive is to make sure that the strain from the surface is transferred to the fiber.

On the one hand, the adhesive shall securely hold the optical fiber in the proper position on the surface of the structure. On the other hand, the adhesive shall allow for an easy and time effective mounting procedure.

Therefore, the choice of the adhesive is another important feature. It is preferred that an ultraviolet (UV) curable adhesive will be used for mounting the fiber. The used UV-curable adhesive may contain a heat component, so that they can be post-cured with a heat treatment. This is done to cure also the places which did not receive (enough) UV-light. Possibly, this type of adhesives is interesting for special applications.

More advantageously, UV-curing can easily be performed when the pad is positioned with the optical fiber attached thereon onto the surface of the structure positioning the optical fiber on the substrate surface when the pad is fabricated from a material being transparent, translucent or semi-transparent for UV light.

Preferably, epoxy adhesives or acrylate adhesives will be used for mounting the fiber. Advantageously, epoxy adhesives can form thin void-free layers. More advantageously, epoxy adhesives are usable even at elevated temperatures. Preferably, for attaching the optical fibers to the surface a two-component epoxy adhesive or an acrylate adhesive or an ultraviolet (UV) curable epoxy adhesive or an ultraviolet (UV) curable acrylate adhesive is used. An advantage over hot curing adhesives is that by UV-curing little or no thermal expansion or compression strains will occur as would be for heat curing at elevated temperatures. An advantage over 2-component epoxies which cure at room temperature is that installation is very fast (minute-like rather than several hours). An advantage over the fast curing cyanoacrylates is that the installation process is much more controllable (the adhesive only starts to cure when irradiated with UV-light rather than immediately). In contrast, using cyanoacrylate adhesives there is the advantage that they may cure very rapidly.

Therefore, in preferred embodiments of the method the adhesive is a UV curable adhesive such as an UV curable epoxy adhesive or an UV curable acrylate adhesive. Accordingly, curing is preferably performed by UV light curing. UV curing can be performed using a UV radiation source or lamp. It is another advantage of the method that UV curing can be performed within some seconds, for example within 30 seconds.

Moreover, using an adhesive such as e.g. a two-component epoxy adhesive or an acrylate adhesive or an ultraviolet (UV) curable epoxy adhesive or an ultraviolet (UV) curable acrylate adhesive, the optical fiber can be applied to different types of materials such as metal, plastic or even concrete.

Preferably, the pad is fabricated from a material being transparent, translucent or semi-transparent to UV light. In a preferred embodiment the pad usable for the method according to the invention is fabricated from a material being selected from the group comprising a composite, a plastic and/or a polymeric material, e.g. an elastomer. The polymeric material preferably has a Shore hardness of between 30 and 90, e.g. 70, but preferably 50, in accordance with ASTM D2240 type A.

More preferably the pad is fabricated from a silicone rubber. Using silicon rubber for the pad has the advantage that the silicon rubber does not stick to the UV-adhesive and hence the pad can be removed after installation of the fibre sensor. Even more preferably the pad is fabricated from a material that is transparent, translucent or semi-transparent to UV light, from a transparent silicone rubber.

It is preferred to keep the pad under slight pressure when positioned in order to press the fibre to the structure, to pre-tension the fibre and to control the thickness of the adhesive layer. In preferred embodiments the method further comprises the step of applying pressure to the pad when the pad is positioned on the substrate surface. In more preferred embodiments slight pressure is applied, for example manual pressure. In even more preferred embodiments pressure is applied by means of or using a rectangular piece of glass. The dimensions of the glass plate can be: 5 x 28 x 60 mm. The glass can be of quartz and is contained in the installation kit.

Advantageously, keeping the positioned pad under slight pressure allows for an equal distribution of the adhesive layer. More advantageously, keeping the positioned pad under slight pressure will also keep the fiber under slight tension. Keeping the fiber under slight tension during the mounting procedure will prevent the fiber from slipping or buckling. On the other hand the applied pressure should not be too high since if the fiber is unduly stretched or pressed during mounting this may affect the measured signal of the sensor. Therefore, it is advantageously that slight and equal/even pressure should be applied to the pad during curing of the adhesive. It was found that a reliable amount of pressure can be applied by using a rectangular body placed on top of the pad during mounting. Since the body for applying pressure during curing should be UV transparent, translucent or semi-transparent for not interfering with the curing UV light, glass was found to be a preferred material for the rectangular body. The weight of the transparent, translucent or semi-transparent block, e.g. glass block, can be insufficient, in which case pressure can be applied, e.g. a pressure of ≥ 0,1 N/mm² and ≤ 0,2 N/mm². The height of the block should be chosen that there is a good uniform illumination of the adhesive region. The dimensions of the glass block can be: 5 x 28 x 60 mm. The glass can be quartz and is contained in the installation kit.

The UV transparent, translucent or semi-transparent rectangular body may be placed freely on top of the pad. However, it is preferred that the UV transparent, translucent or semi-transparent rectangular body will be placed reliably on top of the cavity comprising the fiber and the adhesive.

In preferred embodiments of the method the pad comprises a second cavity on the second side along the longitudinal axis of the pad opposite to the first cavity for receiving a means for applying pressure to the pad when being positioned on the surface of the structure.

In even more preferred embodiments the second cavity has a length and width corresponding to the first cavity. This will provide that pressure is reliably applied to the portion of the pad comprising fiber and adhesive.

It is preferred that if the first cavity has a length optionally between 10 to 50 mm, e.g. between ≥ 25 mm and ≤ 35 mm, preferably between ≥ 28 mm and ≤ 32 mm, more preferably of 30 mm, the second cavity will also have a length optionally between 10 to 50 mm, e.g. between ≥ 25 mm and ≤ 35 mm, preferably between ≥ 28 mm and ≤ 32 mm, more preferably of 30 mm. Accordingly, it is preferred that if the first cavity has a width between ≥ 5 mm and ≤ 12 mm, preferably between ≥ 6 mm and ≤ 10 mm, more preferably of 8 mm, the second cavity will also have a width between ≥ 5 mm and ≤ 12 mm, preferably between ≥ 6 mm and ≤ 10 mm, more preferably of 8 mm.

In a preferred embodiment the pad usable for the method according to the invention the second cavity has a depth between ≥ 2 mm and ≤ 4 mm, preferably between ≥ 2,2 mm and ≤ 3 mm, more preferably of 2,4 mm.

In more preferred embodiments of the method the pressure is applied to the pad by means of a UV transparent, translucent or semi-transparent rectangular body fitting in the second cavity, preferably a rectangular glass piece.

Preferably, the transparent, translucent or semi-transparent rectangular glass body has a length nearly as long as the second cavity. For example, if the second cavity has a length optionally between 10 to 50 mm, e.g. between ≥ 25 mm and ≤ 35 mm, preferably between ≥ 28 mm and ≤ 32 mm, more preferably of 30 mm, the rectangular glass body has a length optionally between 8 to 48 mm, e.g. between ≥ 22 mm and ≤ 32 mm, preferably between ≥ 25 mm and ≤ 30 mm, more preferably of 28 mm.

More, preferably, the transparent, translucent or semi-transparent rectangular glass body has a width according to the width of the pad and/or the second cavity. But, it is possible that the glass body has a larger width than the pad and/or the second cavity.

After curing of the adhesive for example after UV-exposure to secure said optical fiber to the substrate surface the pad will be removed while leaving the optical fiber secured by a coating of adhesive onto the substrate surface.

The method of the invention advantageously can be used for securing optical fibers to structures especially in mechanical structures for example of civil, aerospace, process engineering, oil and gas structures, etc. for monitoring strain or stress.

The method of the invention provides improved parameters for mounting of a sensor. Especially, the length of the fixation area and the procedure of the mounting are improved. Moreover, the type of the usable fibers, the coating of the fibers and the adhesive used will further improve the performance of the sensor mounted according to the method of the invention.

Moreover, the method of the invention allows reliable mounting of optical fibers to structures with repeatable and fast installation characteristics.

An optical fiber containing at least one fiber Bragg grating directly fixed to the surface of a structure by means of an adhesive may be denoted "FBG strain sensor" or "FBG strain gauge".

The method of the invention may further comprise a step of a final curing after removing of the pad. This can be done by exposing the mounted FBG strain sensor again to UV-light. Possibly also hot curing can be done when a heat catalyst is contained in the adhesive as well.

For providing additional security, the mounted fiber can additionally be secured to the surface on one or both ends of the adhesive layer. Therefore, the method may further comprise a step of securing the mounted fiber on both sides of the mounted sensor by an adhesive. Preferred are rapid adhesives, preferably mixed of two components, e.g. a component in form of a powder and a component in form of a liquid. This may avoid unwanted movements or twisting of the fiber at the end points of the sensor. Preferably, such additional securing will secure the buffered fiber before and after the ends of the mounted FBG sensor.

In a preferred embodiment of the present invention the method further comprises a step of applying at least one layer of a chemical protection coating onto the mounted optical fiber. It can be advantageously to cover the mounted FBG sensor with more than one layer of a chemical protection coating, for example with two to five layers, preferably with three to four layers. Usable chemical protection coatings are preferably selected from the group comprising polyurethane paints or single component silicon rubbers.

Preferred chemical protection coatings are single component nitrile rubbers, more preferred single component nitrile rubbers that cure at room temperature.

In another preferred embodiment of the present invention the method further comprises a step of applying at least one layer of a mechanical protection coating onto said mounted optical fiber. Usable mechanical protection coatings are silicone adhesives. Advantageously, silicone sealants can protect against moisture, environmental attack, mechanical and thermal shock. Moreover, silicone sealants can provide long term bonding.

Applying layers of chemical and/or mechanical protection coating may advantageously protect the mounted sensor from chemical and/or mechanical damage such as humidity, thermal or mechanical damage.

It is to be understood that the sequence of procedural steps of the present invention is not considered to be a definite succession. According to a chosen proceeding the succession of steps may vary. Especially the succession of steps b) positioning and attaching the optical fiber onto the pad and c) applying an adhesive to the surface of the cavity is interchangeable.

Another embodiment of the present invention provides a pad for mounting an optical fiber containing at least one fiber Bragg grating to a surface of a structure, comprising:
- a first and a second side along a longitudinal axis of the pad,
- a first cavity on said first side having a length optionally between 10 to 50 mm, e.g. between ≥ 25 mm and ≤ 35 mm for receiving an adhesive for attachment of the fiber onto the surface of the structure or for receiving adhesive from the surface of the structure after adhesive has been applied thereto and the pad with fiber is placed on top of the adhesive layer,
- a second cavity on the second side along the longitudinal axis of the pad opposite to the first cavity for receiving a means for applying pressure to the pad when being positioned on the surface of the structure, and
- a first and a second slot on either side of said first cavity extending along the longitudinal axis of the pad for receiving portions of the optical fiber when the optical fiber is attached to the pad,
wherein the pad is fabricated from a material being transparent, translucent or semi-transparent for UV light. The surface of the said first cavity of the pad is preferably non-stick to the adhesive before positioning and attaching of the optical fiber onto the pad.

The pad according to the present invention can be used for mounting an optical fiber containing at least one fiber Bragg grating to a surface of a structure. Particularly, the pad according to the present invention can be used in the method of the present invention. It is therefore to be understood that the features of the pad described below can be features of the pad usable in the method of the present invention for mounting an optical fiber to a surface.

In a preferred embodiment the pad and the pad usable for the method according to the invention is fabricated from a material being selected from the group comprising a composite, a plastic and/or a polymeric material. Advantageously, composites, plastics and polymeric materials provide sufficient hardness to hold the buffered fiber ends without slippage when positioned in the slots. Preferably the buffered coating is tightly fixed to the coated optical fiber. If not the fiber could slip inside the buffer and no pre-strain can be set. Sufficient hardness will provide to keep the fiber under slight tension during installation of the fiber. The material should also be selected so that it keeps a small pre-tension on the fiber.

It is preferred that the pad and the pad usable for the method according to the invention is fabricated from a silicone rubber, also known as polysiloxane. Advantageously, silicone rubber provides sufficient hardness to hold the buffered fiber ends without slippage when positioned in the slots. Preferably the Shore hardness is between 30, and 90, e.g. 70 but more preferably 50, according to ASTM D2240 type A.

Moreover, silicone rubber provides sufficient flexibility to bend around the fiber especially in transverse direction when put under pressure. The hardness and flexibility of silicone rubber allows to adjust the adhesive as a thin layer around the cylindrical fiber shape.

The fixation length is one important feature of the mounted fiber Bragg grating sensor. The fixation length of the sensor is defined by the length of the first cavity between the regions of the pad on both sides of the first cavity where portions of the fiber are held in slots, which regions may be referred to as clamping zones of the pad.

In a preferred embodiment the first cavity of the pad and the pad usable for the method according to the invention has a length optionally between 10 to 50 mm, e.g. between ≥ 28 mm and ≤ 32 mm, preferably of 30 mm. A fixation length optionally between 10 and 50mm, e.g. between ≥ 28 mm and ≤ 32 mm, preferably of 30 mm, will secure the portion comprising the fiber Bragg grating of the sensor without unduly excess of length of the fixation.

The fixation width is defined by the width of the first cavity. Preferably, the first cavity has a width between ≥ 5 mm and ≤ 12 mm, preferably between ≥ 6 mm and ≤ 10 mm, more preferably of 8 mm.

Another important mounting parameter is the thickness of the adhesive layer around the fiber. In an alternative embodiment the adhesive can be applied on the surface of the structure and the dry sensor pad with fiber placed on top of this adhesive layer. Preferably the thickness of the adhesive layer is ≤ 0,2 mm. Preferably, the portion of the fiber received by the first cavity will be free from buffer. A "buffer" is a protective polymer layer without optical properties applied over the coating of the fiber. Advantageously, an adhesive layer with a thickness of ≤ 0,2 mm will provide a secure bonding of the fiber to the structure surface without unduly reducing the elasticity of the mounting between the fiber and the structure surface. The thickness of the glue should preferably be less than 0,4 mm after putting on pressure during the installation. Even if some adhesive escapes from the first cavity, the design provides sufficient adhesive.

On both sides of the first cavity the pad comprises regions where portions of the fiber are held in slots, which may be referred to as clamping zones of the pad. This preferred construction of the pad and the pad usable for the method according to the invention comprising clamping zones secures the fiber to the pad and allows for stabilisation of the fibers in the pad with some pre-tension.

The slots preferably have a size that is slightly smaller than the diameter of the buffered fiber, e.g. about 900 micron for good fixation of the fiber. Any buffered coating on the fiber should preferably be tightly fixed to the coated optical fiber. If not the fiber could slip inside the buffer and no pre-strain can be set.

In preferred embodiments the slots have a diameter between ≥ 0,5 mm and ≤ 1,3 mm, preferably between ≥ 0,8 mm and ≤ 1 mm, more preferably 0,9 mm. Generally, optical fibers are difficult to handle due to their very small diameter and their high flexibility. Optical fibers with buffer for example may have a diameter of about 0,9 mm. To provide for further securing of the fiber to the clamping zones the slots preferably have a length between ≥ 5 mm and ≤ 10 mm, preferably between ≥ 6 mm and ≤ 8 mm, more preferably 7,5 mm. Being secured in such slots allows for good stabilisation of the fiber which is secured in place during the mounting procedure. Moreover, the fiber is pre-tensioned. This will prevent the fiber from buckling during the mounting process.

In preferred embodiments the pad and the pad usable for the method according to the invention has a length optionally between 20 to 70 mm, e.g. between ≥ 35 mm and ≤ 55 mm, preferably between ≥ 40 mm and ≤ 50 mm, more preferably 45 mm. Further preferred the pad has a width between ≥ 5 mm and ≤ 12 mm, preferably between ≥ 6 mm and ≤ 10 mm, more preferably of 8 mm. In a more preferred embodiments the pad and the pad usable for the method according to the invention has dimensions of 45 mm length and 8 mm width.

It is preferred that the pad is kept under slight pressure during the mounting procedure. For that purpose the pad and the pad usable for the method according to the invention comprises in preferred embodiments a second cavity on the second side along the longitudinal axis of the pad opposite to the first cavity for receiving a means for applying pressure to the pad when being positioned on the surface of the structure.

Preferably, the second cavity has a length and width corresponding to the length and width of the first cavity. It is preferred that if the first cavity has a length optionally between 10 to 50 mm, e.g. between ≥ 25 mm and ≤ 35 mm, preferably between ≥ 28 mm and ≤ 32 mm, more preferably of 30 mm, the second cavity will also have a length optionally between 10 to 50 mm, e.g. between ≥ 25 mm and ≤ 35 mm, preferably between ≥ 28 mm and ≤ 32 mm, more preferably of 30 mm. Accordingly, it is preferred that if the first cavity has a width between ≥ 5 mm and ≤ 12 mm, preferably between ≥ 6 mm and ≤ 10 mm, more preferably of 8 mm, the second cavity will also have a width between ≥ 5 mm and ≤ 12 mm, preferably between ≥ 6 mm and ≤ 10 mm, more preferably of 8 mm.

In a preferred embodiment of the pad and the pad usable for the method according to the invention the second cavity has a depth between ≥ 2 mm and ≤ 4 mm, preferably between ≥ 2,2 mm and ≤ 3 mm, more preferably of 2,4 mm.

The pressure can be applied by means of a rectangular body fitting in the second cavity on top of the pad when mounted. In preferred embodiments the means is a rectangular transparent, translucent or semi-transparent body, e.g. a glass body. Advantageously, a glass piece will keep the fiber under slight pressure and will provide for an equal distribution of the adhesive layer in the first cavity, so that the fiber held by the pad is slightly pre-tensioned and pushed onto the substrate. If necessary a slight pressure can be applied, e.g. between 0,1 N/mm² and 0,2 N/mm².

A more preferred embodiment of the pad according to the invention and the pad usable for the method according to the invention provides a pad for mounting an optical fiber containing at least one fiber Bragg grating to a surface of a structure, comprising:
- a first and a second side along a longitudinal axis of the pad,
- a first cavity on said first side for receiving an adhesive for attachment of the fiber onto the surface of the structure having a length optionally between 10 to 50 mm, e.g. between ≥ 25 mm and ≤ 35 mm and a depth between ≥ 0,4 mm and ≤ 1 mm,
- a second cavity on the second side along the longitudinal axis of the pad opposite to the first cavity for receiving a means for applying pressure to the pad when being positioned on the surface of the structure having a length optionally between 10 to 50 mm, e.g. between ≥ 25 mm and ≤ 35 mm, and
- a first and a second slot on either side of said first cavity extending along the longitudinal axis of the pad for receiving portions of the optical fiber when the optical fiber is attached to the pad having a size between ≥ 0,5 mm and ≤ 1,3 mm, and a length between ≥ 5 mm and ≤ 10 mm,
wherein the pad is fabricated from silicone rubber transparent, translucent or semi-transparent for UV light. The silicone rubber material preferably does not bond to nor react with the adhesive.

Another embodiment of the present invention provides an installation kit for mounting an optical fiber containing at least one fiber Bragg grating to a surface of a structure, comprising:
- a pad according to the invention and
- a UV transparent, translucent or semi-transparent rectangular body fitting in a second cavity on the second side along the longitudinal axis of the pad opposite to the first cavity of said pad.

Preferably, the transparent, translucent or semi-transparent rectangular body is a glass body.

Preferably, the transparent, translucent or semi-transparent rectangular glass body has a length nearly as long as the second cavity. For example, if the second cavity has a length optionally between 10 to 50 mm, e.g. between ≥ 25 mm and ≤ 35 mm, preferably between ≥ 28 mm and ≤ 32 mm, more preferably of 30 mm, the rectangular glass body can have a length optionally between 8 to 48 mm, e.g. between ≥ 22 mm and ≤ 32 mm, preferably between ≥ 25 mm and ≤ 30 mm, more preferably of 28 mm.

Preferably, the transparent, translucent or semi-transparent rectangular glass body has a width according to the width of the pad and/or the second cavity. It is also preferred that the transparent, translucent or semi-transparent rectangular glass body has a width slightly wider than the width of the pad and/or the second cavity, for example between ≥ 1 mm and ≤ 4 mm, preferably between ≥ 2 mm and ≤ 3 mm.

It is to be understood that the features of the pad according the present invention can also be features of the pad usable in the method according the present invention.

### Brief Description of the drawings

Further features of the present invention will become apparent from the examples and figures, wherein:
Fig. 1 is a perspective schematic drawing of an exemplary pad according to an embodiment of the invention;
Fig. 2 is a schematic drawing of a side view of an exemplary pad according to an embodiment of the invention;
Fig. 3 is a perspective view onto a pad and a rectangular glass body fitting in a cavity on top of the pad according to an embodiment of the invention.

### Detailed description of the embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

In the drawings, like reference numerals indicate like features; and, a reference numeral appearing in more than one figure refers to the same element. The drawings and the following detailed descriptions show specific embodiments of the pad of the invention.

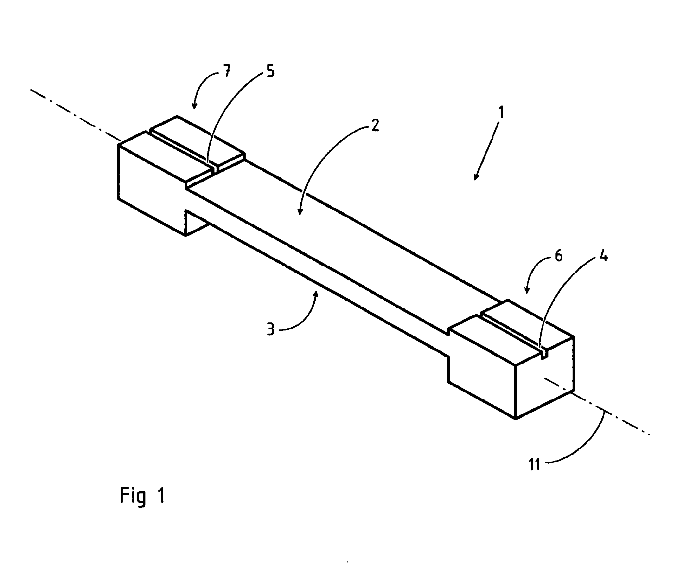

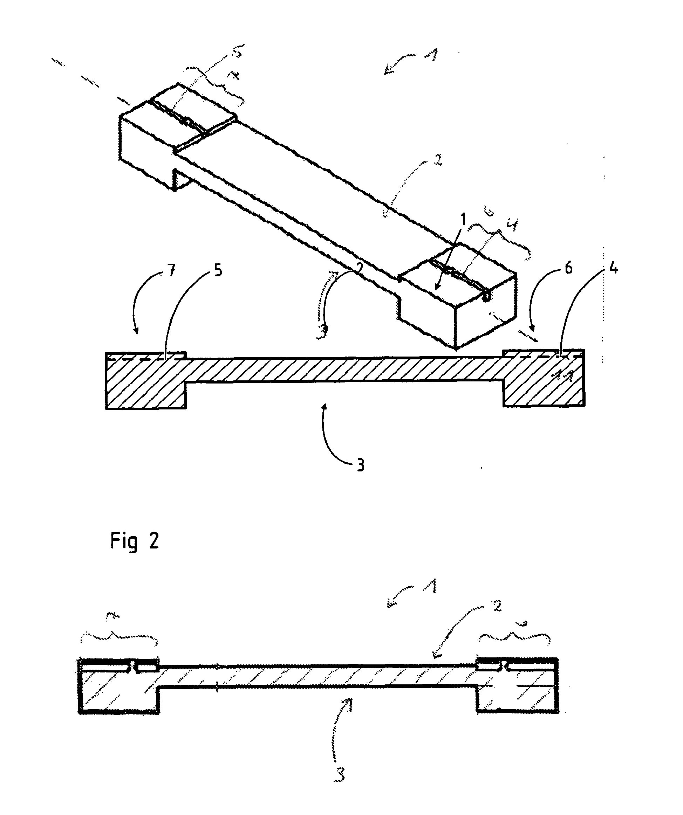

An example of a preferred embodiment of the pad according to the invention is shown in the perspective drawing of Fig. 1 and the schematic drawing of a side view of Fig. 2. The pad 1 comprises a first and a second side along a longitudinal axis 11 of the pad and a first cavity 2 on the first side for receiving an adhesive for attaching the fiber onto the surface of the structure. The first cavity 2 has preferably a length optionally between 10 to 50 mm, e.g. between ≥ 25 mm and ≤ 35 mm. All dimensions given are not a limitation on the pad itself as the principle stays identical. On the second side along the longitudinal axis 11 of the pad 1 opposite to the first cavity 2 the pad comprises a second cavity 3 for receiving a means for applying pressure to the pad 1 when being positioned on the surface of the structure. The pad 1 comprises further a first slot 4 and a second slot 5 on either side of the first cavity 2 extending along the longitudinal axis 11 of the pad 1 for receiving portions of the optical fiber when the optical fiber is attached to the pad 1. The slots 4, 5 are comprised in regions on both sides of the first cavity 2, referred to as clamping zones 6 and 7 of the pad. The pad 1 is preferably fabricated from a material being transparent, translucent or semi-transparent for UV light. The surface of said first cavity 2 of the pad I is preferably non-stick to the adhesive at least before positioning and attaching of the optical fiber onto said pad 1.

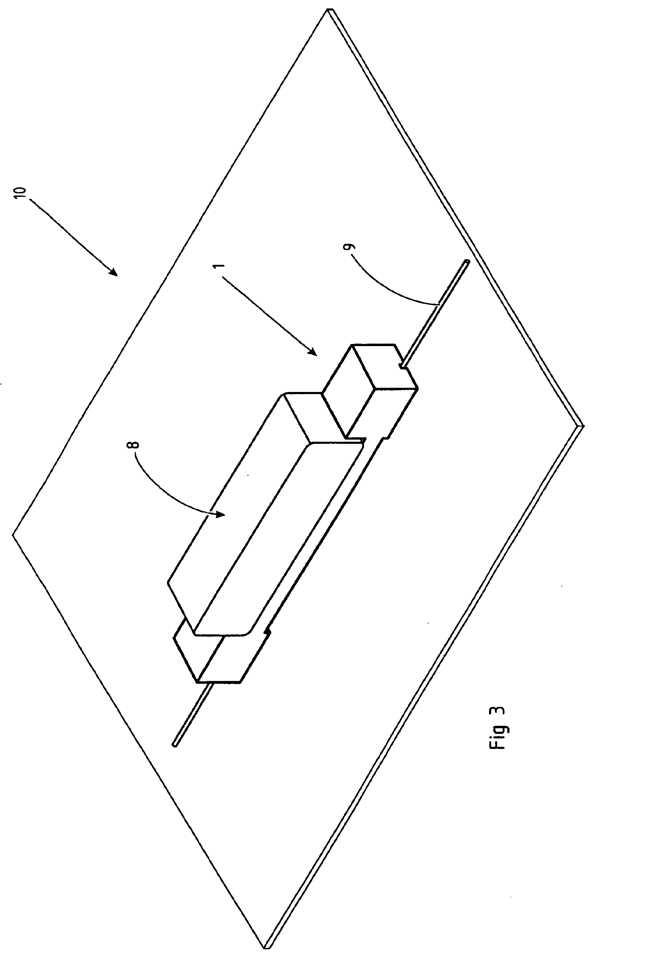

Fig. 3 shows a perspective view onto a pad 1 positioned on a steel plate 10 with an optical fiber 9 in place. A UV transparent, translucent or semi-transparent rectangular glass body 8 fitting in the second cavity of the pad I is positioned on the pad 1.

For purpose of example a mounting procedure was performed in a dust-free environment at room temperature. Direct sunlight was avoided.

A pad as schematically shown in Figs. 1 and 2 fabricated from silicone rubber being transparent, translucent or semi-transparent for UV-light and having a length of 45 mm and a width of 8 mm was provided. The rubber preferably has a Shore hardness of between 30 and 90, e.g. 70 but preferably 50, according to ASTM D2240 TYPE A and should be non-sticking with the used adhesive. The pad comprised a first cavity having a length of 30 mm, a width of 8 mm, and a depth of 0,6 mm. Opposite the first cavity the pad comprised a second cavity having a length of 30 mm, a width of 8 mm, and a depth of 2,4 mm. On both sides of the first cavity the pad comprised regions referred to as clamping zones having a length of 7,5 mm each. Centrally in the clamping zones slots along the longitudinal axis of the pad with a size of 0,9 mm were provided.

The surface of the structure was cleaned with a piece of gauze wetted with isopropanol and striated with an abrasive paper with a grain size of 120 after which cleaning was repeated until the surface of the structure was clean.

Subsequently, a Draw Tower Grating coated with ORMOCER® (FBGS technologies) and having a buffer left and right of the central 30 mm zone comprising the fiber Bragg grating was cleaned with isopropanol and positioned on the pad, wherein the portion of the fiber without buffer was positioned in the first cavity. It was made sure that the fibre was attached under slight tension in the pad.

Subsequently, a thin coat of NOA61 adhesive (Norland Optical Adhesive) was locally applied to the surface of a steel plate and distributed evenly with a wooden stick. Adhesive may be applied alternatively or additionally to the first cavity of the pad. After that the pad with the fiber was positioned on top of the adhesion zone on the steel plate so that the optical fiber was positioned on the surface of the steel plate. Manual pressure was applied on the pad by means of a rectangular piece of glass fitting in the second cavity as shown in Fig. 3. The adhesive was cured by exposing the glass piece and the underlying pad during 30 seconds to a mercury lamp of 100 W (Omnicure S 1000, EXFO) for UV-radiation. Subsequently, the pad was removed and a final curing was performed by exposing the strain sensor during 5 minutes to the UV-light. Afterwards, the buffered fiber was secured before and after the sensor with rapid adhesive, preferably rapid adhesive X60 comprising two components after being cleaned with isopropanol.

Subsequently, the strain sensor was covered by applying three layers of NG 150 protective sealant (HBM) whereas the layers dried a few minutes before applying the next layer and after the final layer the sealant was allowed to dry for one hour. Finally, after drying and cleaning of the surface a layer of approximately 2 mm thickness of a mechanical protection sealant RTV 3145 (MIL-A-46146, Dow Corning) on the layers of the NG150 was applied and allowed to cure by air humidity for 72 hours.

It was found that the optical fiber sensor was successfully mounted to the surface of the steel plate.

It is to be understood that this invention is not limited to the particular features of the means and/or the process steps of the methods described as such means and methods may vary. It is also to be understood that the terminology used herein is for purposes of describing particular embodiments only, and is not intended to be limiting. It must be noted that, as used in the specification and the appended claims, the singular forms "a" "an" and "the" include singular and/or plural referents unless the context clearly dictates otherwise. It is also to be understood that plural forms include singular and/or plural referents unless the context clearly dictates otherwise. It is moreover to be understood that, in case parameter ranges are given which are delimited by numeric values, the ranges are deemed to include these limitation values.

The particular combinations of elements and features in the above detailed embodiments are exemplary only. As those skilled in the art will recognize, variations, modifications, and other implementations of what is described herein can occur to those of ordinary skill in the art without departing from the scope of the invention as claimed. Accordingly, the foregoing description is by way of example only and is not intended as limiting. The invention's scope is defined in the following claims.
Furthermore, reference signs used in the description and claims do not limit the scope of the invention as claimed.

## Claims

1. A method for mounting an optical fiber containing at least one fiber Bragg grating to a surface of a structure, comprising the steps of:
a) providing a pad wherein said pad (1) comprises a first and a second side along a longitudinal axis (11) of the pad (1), a first cavity (2) on the first side for receiving an adhesive, the adhesive being for attaching the fiber onto the surface of the structure, and a first and a second slot (4, 5) on both sides of the first cavity (2) extending along the longitudinal axis (11) of the pad (1) for receiving portions of the optical fiber when the optical fiber is attached to the pad (1),
b) positioning and attaching the optical fiber onto said pad (1) to extend along the longitudinal axis (11) of the pad (1) wherein the portion of the fiber containing at least one fiber Bragg grating is positioned in said first cavity (2) of said pad (1) and portions of said fiber are positioned in said first and second slot (4, 5) on both sides of said first cavity (2),
c) applying an adhesive to the surface of said first cavity (2)or on the surface of the structure, or on both of them,
d) positioning said pad (1) with said optical fiber attached thereon onto the surface of the structure so that said optical fiber is positioned on said structure surface,
e) curing the adhesive to secure said optical fiber to said structure surface,
and
f) removing the pad (1) while leaving said optical fiber secured by a coating of said adhesive on said substrate surface,
wherein the surface of said first side of the pad (1) is non-stick to the adhesive before positioning and attaching of the optical fiber onto said pad, the pad material is optionally UV transparent, translucent or semi-transparent, the adhesive is a UV curable adhesive and wherein curing is performed by UV light curing.

2. The method according to claim 1 wherein the adhesive is an epoxy adhesive or an acrylate adhesive.

3. The method according to any one of the aforementioned claims wherein first cavity (2) of the pad (1) for receiving an adhesive has a length between ≥ 25 mm and ≤ 35 mm.

4. The method according to any one of the aforementioned claims further comprising the step of applying pressure to said pad (1) when the pad (1) is positioned on the substrate surface.

5. The method according to any one of the aforementioned claims wherein the pad (1) comprises a second cavity (3) on the second side along the longitudinal axis (11) of the pad opposite to the first cavity (2) for receiving a means for applying pressure to the pad (1) when being positioned on the surface of the structure.

6. The method according to any one of the aforementioned claims, wherein the pad (1) is UV transparent, translucent or semi-transparent and pressure is applied to the pad (1) by means of a UV transparent, translucent or semi-transparent rectangular body (8) fitting in said second cavity (3).

7. The method according to any one of claims 1 to 6.
further comprising the step of applying at least one layer of a chemical protection coating onto said mounted optical fiber, or
further comprising the step of applying at least one layer of a mechanical protection coating onto said mounted optical fiber.

8. A pad for mounting an optical fiber containing at least one fiber Bragg grating to a surface of a structure, comprising:
- a first and a second side along a longitudinal axis (11) of the pad (1),
- a first cavity (2) on said first side having a length between ≥ 25 mm and ≤ 35 mm for receiving an adhesive, the adhesive being for attaching the fiber onto the surface of the structure,
- a second cavity (3) on the second side along the longitudinal axis (11) of the pad (1) opposite to the first cavity (2) for receiving a means for applying pressure to the pad (1) when being positioned on the surface of the structure, and
- a first and a second slot (4, 5) on either side of said first cavity (2) extending along the longitudinal axis (11) of the pad (1) for receiving portions of the optical fiber when the optical fiber is attached to the pad (1),
wherein the pad (1) is fabricated from a material being transparent, translucent or semi-transparent for UV light and wherein a surface of said first side of the pad (1) is non-stick to the adhesive before positioning and attaching of the optical fiber onto said pad (1).

9. The pad according to claim 8, wherein the pad (1) is fabricated from a material being selected from the group comprising a composite, a plastic and/or a polymeric material, preferably from a silicone rubber.

10. The pad according to claim 8 or 9, wherein the first cavity (2) has a length between ≥ 28 mm and ≤ 32 mm, preferably of 30 mm.

11. The pad according to any one of the claims 8 to 10, wherein the first cavity (2) has a width between ≥ 5 mm and ≤ 12 mm, preferably between ≥ 6 mm and ≤ 10 mm, more preferably of 8 mm.

12. The pad according to any one of the claims 8 to 11, wherein the first cavity (2) has a depth between ≥ 0,4 mm and ≤ 1 mm, preferably between ≥ 0,5 mm and ≤ 0,8 mm, more preferably of 0,6 mm.

13. The pad according to any one of the claims 8 to 12, wherein the second cavity (3) has a length and width corresponding to the length and width of the first cavity (2).

14. The pad according to any one of the claims 8 to 13,
wherein the pad (1) has a length between ≥ 35 mm and ≤ 55 mm, preferably between ≥ 40 mm and ≤ 50 mm, more preferably of 45 mm, and/or
wherein the pad (1) has a width between ≥ 5 mm and ≤ 12 mm, preferably between ≥ 6 mm and ≤ 10 mm, more preferably of 8 mm.

15. An installation kit for mounting an optical fiber containing at least one fiber Bragg grating to a surface of a structure, comprising:
- a pad (1) according to any one of the aforementioned claims 8 to 14, and
- a UV transparent, translucent or semi-transparent rectangular body (8) fitting in a second cavity (3) on the second side along the longitudinal axis (11) of the pad opposite to the first cavity (2) of said pad (1).

## Patentansprüche

1. Verfahren zur Montage einer optischen Faser, die mindestens ein Bragg-Gitter enthält, an einer Oberfläche einer Struktur, umfassend die folgenden Schritte:
a) Bereitstellen eines Blocks, wobei der Block (1) eine erste und eine zweite Seite entlang einer Längsachse (11) des Blocks (1) umfasst, sowie einen ersten Hohlraum (2) an der ersten Seite zur Aufnahme eines Klebstoffs, wobei der Klebstoff zum Befestigen der Faser an der Oberfläche der Struktur dient, und einen ersten und zweiten Schlitz (4, 5) an beiden Seiten des ersten Hohlraums (2), die sich entlang der Längsachse (11) des Blocks (1) erstrecken, zur Aufnahme von Abschnitten der optischen Faser, wenn die optische Faser an dem Block (1) befestigt wird,
b) Positionieren und Befestigen der optischen Faser an dem Block (1), so dass sie sich entlang der Längsachse (11) des Blocks (1) erstreckt, wobei der Abschnitt der Faser, der mindestens ein Bragg-Gitter enthält, im ersten Hohlraum (2) des Blocks (1) angeordnet ist und Abschnitte der Faser in dem ersten und zweiten Schlitz (4, 5) an beiden Seiten des ersten Hohlraums (2) positioniert sind,
c) Auftragen des Klebstoffs auf die Oberfläche des ersten Hohlraumes (2) oder auf die Oberfläche der Struktur oder auf beide,
d) Positionieren des Blocks (1) mit der daran befestigten optischen Faser auf der Oberfläche der Struktur, so dass die optische Faser auf der Strukturoberfläche positioniert ist,
e) Härten des Klebstoffs zur Sicherung der optischen Faser an der Strukturoberfläche, und
f) Entfernen des Blocks (1), während die optische Faser durch einen Überzug des Klebstoffs an der Substratoberfläche gesichert bleibt,
wobei die Oberfläche der ersten Seite des Blocks (1) für den Klebstoff vor dem Positionieren und Befestigen der optischen Faser an dem Block nicht klebrig ist, das Blockmaterial gegebenenfalls für UV-Licht durchlässig, durchscheinend oder halbdurchlässig ist, der Klebstoff ein UV-härtbarer Klebstoff ist und wobei das Härten durch UV-Lichthärten durchgeführt wird.

2. Verfahren angeführt 1, wobei der Klebstoff ein Expoxy-Klebstoff oder ein Acrylat-Klebstoff ist.

3. Verfahren nach einem der vorangehenden Ansprüche, wobei ein erster Hohlraum (2) des Blocks (1) zur Aufnahme eines Klebstoffs eine Länge zwischen ≥ 25 mm und ≤ 35 mm aufweist.

4. Verfahren nach einem der vorangehenden Ansprüche, des Weiteren umfassend den Schritt des Ausübens von Druck auf den Block (1), wenn der Block (1) auf der Substratoberfläche positioniert ist.

5. Verfahren nach einem der vorangehenden Ansprüche, wobei der Block (1) einen zweiten Hohlraum (3) an der zweiten Seite entlang der Längsachse (11) des Blocks gegenüber dem ersten Hohlraum (2) zur Aufnahme eines Mittels zum Ausüben von Druck auf den Block (1) umfasst, wenn dieser auf der Oberfläche der Struktur positioniert ist.

6. Verfahren nach einem der vorangehenden Ansprüche, wobei der Block (1) für UV- Licht durchlässig, durchscheinend oder halbdurchlässig ist und Druck auf den Block (1) mit Hilfe eines für UV-Licht durchlässigen, durchscheinenden oder halbdurchlässigen rechteckigen Körpers (8) ausgeübt wird, der in dem zweiten Hohlraum (3) sitzt.

7. Verfahren nach einem der Ansprüche 1 bis 6, des Weiteren umfassend des Schritt des Auftragens zumindest einer Schicht eines chemischen Schutzüberzugs auf der montierten optischen Faser, oder
des Weiteren umfassend den Schritt des Auftragens zumindest einer Schicht eines mechanischen Schutzüberzugs auf der montierten optischen Faser.

8. Block zur Montage einer optischen Faser, die mindestens ein Bragg-Gitter enthält, an einer Oberfläche einer Struktur, umfassend:
- eine erste und eine zweite Seite entlang einer Längsachse (11) des Blocks (1);
- einen ersten Hohlraum (2) an der ersten Seite mit einer Länge zwischen ≥ 25 mm und ≤ 35 mm zur Aufnahme eines Klebstoffs, wobei der Klebstoff zum Befestigen der Faser an der Oberfläche der Struktur dient;
- einen zweiten Hohlraum (3) an der zweiten Seite entlang der Längsachse (11) des Blocks (1) gegenüber dem ersten Hohlraum (2) zur Aufnahme eines Mittels zum Ausüben von Druck auf den Block (1), wenn dieser auf der Oberfläche der Struktur positioniert ist, und
- einen ersten und zweiten Schlitz (4, 5) an jeder der Seiten des ersten Hohlraums (2), die sich entlang der Längsachse (11) des Blocks (1) erstrecken, zur Aufnahme von Abschnitten der optischen Faser, wenn die optische Faser an dem Block (1) befestigt wird,
wobei der Block (1) aus einem Material hergestellt ist, das für UV-Licht durchlässig, durchscheinend oder halbdurchlässig ist, und wobei eine Oberfläche der ersten Seite des Blocks (1) für den Klebstoff vor dem Positionieren und Befestigen der optischen Faser an dem Block (1) nicht klebrig ist.

9. Block nach Anspruch 8, wobei der Block (1) aus einem Material hergestellt ist, das ausgewählt ist aus der Gruppe umfassend einen Verbundstoff, ein Kunststoff- und/oder ein polymeres Material, vorzugsweise aus einem Silikongummi.

10. Block nach Anspruch 8 oder 9, wobei der erste Hohlraum (2) eine Länge zwischen ≥ 28 mm und ≤ 32 mm, vorzugsweise von 30 mm aufweist.

11. Block nach einem der Ansprüche 8 bis 10, wobei der erste Hohlraum (2) eine Breite zwischen ≥ 5 mm und ≤ 12 mm aufweist, vorzugsweise zwischen ≥ 6 mm und ≤ 10 mm, insbesondere von 8 mm.

12. Block nach einem der Ansprüche 8 bis 11, wobei der erste Hohlraum (2) eine Tiefe zwischen ≥ 0,4 mm und ≤ 1 mm aufweist, vorzugsweise zwischen ≥ 0,5 mm und ≤ 0,8 mm, insbesondere von 0,6 mm.

13. Block nach einem der Ansprüche 8 bis 12, wobei der zweite Hohlraum (3) eine Länge und Breite entsprechend der Länge und Breite des ersten Hohlraums (2) aufweist.

14. Block nach einem der Ansprüche 8 bis 13, wobei der Block (1) eine Länge zwischen ≥ 35 mm und ≤ 55 mm aufweist, vorzugsweise zwischen ≥ 40 mm und ≤ 50 mm, insbesondere von 45 mm und/oder
wobei der Block (1) eine Breite zwischen ≥ 5 mm und ≤ 12 mm aufweist, vorzugsweise zwischen ≥ 6 mm und ≤ 10 mm, insbesondere von 8 mm.

15. Installationssatz zur Montage einer optischen Faser, die mindestens ein Bragg-Gitter enthält, an einer Oberfläche einer Struktur, umfassend:
- einen Block (1) nach einem der vorangehenden Ansprüche 8 bis 14, und
- einen für UV-Licht durchlässigen, durchscheinenden oder halbdurchlässigen rechteckigen Körper (8), der in einem zweiten Hohlraum (3) an der zweiten Seite entlang der Längsachse (11) des Blocks gegenüber dem ersten Hohlraum (2) des Blocks (1) sitzt.

## Revendications

1. Procédé pour monter une fibre optique contenant au moins un réseau de Bragg sur fibre à une surface d'une structure, comprenant les étapes de :
a) fourniture d'une plage de connexion dans laquelle ladite plage de connexion (1) comprend un premier et un second côté le long d'un axe longitudinal (11) de la plage de connexion (1), une première cavité (2) sur le premier côté pour recevoir un adhésif, l'adhésif servant à attacher la fibre sur la surface de la structure, et une première et une seconde fente (4, 5) des deux côtés de la première cavité (2) s'étendant le long de l'axe longitudinal (11) de la plage de connexion (1) pour recevoir des parties de la fibre optique quand la fibre optique est attachée à la plage de connexion (1),
b) positionnement et attachement de la fibre optique sur ladite plage de connexion (1) pour s'étendre le long de l'axe longitudinal (11) de la plage de connexion (1) dans laquelle la partie de la fibre contenant au moins un réseau de Bragg sur fibre est positionnée dans ladite première cavité (2) de ladite plage de connexion (1) et des parties de ladite fibre sont positionnées dans ladite première et ladite seconde fente (4, 5) des deux côtés de ladite première cavité (2),
c) application d'un adhésif à la surface de ladite première cavité (2) ou sur la surface de la structure, ou sur les deux,
d) positionnement de ladite plage de connexion (1), ladite fibre optique étant attachée dessus sur la surface de la structure de sorte que ladite fibre optique est positionnée sur ladite surface de structure,
e) durcissement de l'adhésif pour fixer ladite fibre optique à ladite surface de structure, et
f) enlèvement de la plage de connexion (1) tout en laissant ladite fibre optique fixée par un revêtement dudit adhésif sur ladite surface de substrat,
dans lequel la surface dudit premier côté de la plage de connexion (1) est anti-adhérente à l'adhésif avant le positionnement et l'attachement de la fibre optique sur ladite plage de connexion, la matière de plage de connexion est de manière facultative transparente, translucide ou semi-transparente aux UV, l'adhésif est un adhésif pouvant être durci aux UV et dans lequel le durcissement est effectué par un durcissement à la lumière UV.

2. Procédé selon la revendication 1, dans lequel l'adhésif est un adhésif époxy ou un adhésif acrylate.

3. Procédé selon l'une quelconque des revendications précédemment mentionnées, dans lequel la première cavité (2) de la plage de connexion (1) pour recevoir un adhésif a une longueur entre ≥ 25 mm et ≤ 35 mm.

4. Procédé selon l'une quelconque des revendications précédemment mentionnées comprenant en outre l'étape d'application d'une pression à ladite plage de connexion (1) quand la plage de connexion (1) est positionnée sur la surface de substrat.

5. Procédé selon l'une quelconque des revendications précédemment mentionnées dans lequel la plage de connexion (1) comprend une seconde cavité (3) sur le second côté le long de l'axe longitudinal (11) de la plage de connexion opposé à la première cavité (2) pour recevoir un moyen pour appliquer une pression à la plage de connexion (1) en étant positionné sur la surface de la structure.

6. Procédé selon l'une quelconque des revendications précédemment mentionnées, dans lequel la plage de connexion (1) est transparente, translucide ou semi-transparente aux UV et une pression est appliquée à la plage de connexion (1) au moyen d'un corps rectangulaire (8) transparent, translucide ou semi-transparent aux UV s'ajustant dans ladite seconde cavité (3).

7. Procédé selon l'une quelconque des revendications 1 à 6,
comprenant en outre l'étape d'application d'au moins une couche d'un revêtement de protection chimique sur ladite fibre optique montée, ou
comprenant en outre l'étape d'application d'au moins une couche d'un revêtement de protection mécanique sur ladite fibre optique montée.

8. Plage de connexion pour monter une fibre optique contenant au moins un réseau de Bragg sur fibre à une surface d'une structure, comprenant :
- un premier et un second côté le long d'un axe longitudinal (11) de la plage de connexion (1),
- une première cavité (2) sur ledit premier côté ayant une longueur entre ≥ 25 mm et ≤ 35 mm pour recevoir un adhésif, l'adhésif servant à attacher la fibre sur la surface de la structure,
- une seconde cavité (3) sur le second côté le long de l'axe longitudinal (11) de la plage de connexion (1) opposé à la première cavité (2) pour recevoir un moyen pour appliquer une pression à la plage de connexion (1) en étant positionné sur la surface de la structure, et
- une première et une seconde fente (4, 5) de chaque côté de ladite première cavité (2) s'étendant le long de l'axe longitudinal (11) de la plage de connexion (1) pour recevoir des parties de la fibre optique quand la fibre optique est attachée à la plage de connexion (1),
dans laquelle la plage de connexion (1) est fabriquée à partir d'une matière transparente, translucide ou semi-transparente à la lumière UV et dans laquelle une surface dudit premier côté de la plage de connexion (1) est anti-adhérente à l'adhésif avant le positionnement et l'attachement de la fibre optique sur ladite plage de connexion (1).

9. Plage de connexion selon la revendication 8, dans laquelle la plage de connexion (1) est fabriquée à partir d'une matière sélectionnée à partir du groupe comprenant une matière composite, plastique et/ou polymère, de préférence d'un caoutchouc de silicone.

10. Plage de connexion selon la revendication 8 ou 9, dans laquelle la première cavité (2) a une longueur entre ≥ 28 mm et ≤ 32 mm, de préférence de 30 mm.

11. Plage de connexion selon l'une quelconque des revendications 8 à 10, dans laquelle la première cavité (2) a une largeur entre ≥ 5 mm et ≤ 12 mm, de préférence entre ≥ 6 mm et ≤ 10 mm, plus de préférence de 8 mm.

12. Plage de connexion selon l'une quelconque des revendications 8 à 11, dans laquelle la première cavité (2) a une profondeur entre ≥ 0,4 mm et ≤ 1 mm, de préférence entre ≥ 0,5 mm et ≤ 0,8 mm, plus de préférence de 0,6 mm.

13. Plage de connexion selon l'une quelconque des revendications 8 à 12, dans laquelle la seconde cavité (3) a une longueur et une largeur correspondant à la longueur et à la largeur de la première cavité (2).

14. Plage de connexion selon l'une quelconque des revendications 8 à 13,
dans laquelle la plage de connexion (1) a une longueur entre ≥ 35 mm et ≤ 55 mm, de préférence entre ≥ 40 mm et ≤ 50 mm, plus de préférence de 45 mm, et/ou
dans laquelle la plage de connexion (1) a une largeur entre ≥ 5 mm et ≤ 12 mm, de préférence entre ≥ 6 mm et ≤ 10 mm, plus de préférence de 8 mm.

15. Kit d'installation pour monter une fibre optique contenant au moins un réseau de Bragg sur fibre à une surface d'une structure, comprenant :
- une plage de connexion (1) selon l'une quelconque des revendications précédemment mentionnées 8 à 14, et
- un corps rectangulaire (8) transparent, translucide ou semi-transparent aux UV s'ajustant dans une seconde cavité (3) sur le second côté le long de l'axe longitudinal (11) de la plage de connexion opposé à la première cavité (2) de ladite plage de connexion (1).
